# EUROPÄISCHE PATENTSCHRIFT

(11) **EP 1 874 847 B1**
(45) Veröffentlichungstag und Bekanntmachung des Hinweises auf die Patenterteilung: **09.02.2011**
(21) Anmeldenummer: 06724391.5
(22) Anmeldetag: 18.04.2006
(51) Int. Cl.: C08G 77/442, C08G 77/54, C07F 7/18, C08G 77/20, C08G 77/22

(54) **VERFAHREN ZUM VERBRÜCKEN VON HYDROXY- ODER CARBONSÄUREGRUPPEN ENTHALTENDEN, ORGANISCH POLYMERISIERBAREN SILANEN ODER SILANHARZEINHEITEN, SOWIE PRODUKTE DIESES VERFAHRENS**
METHOD FOR BRIDGING ORGANICALLY POLYMERISABLE SILANES OR SILANE RESIN UNITS CONTAINING HYDROXY GROUPS OR CARBOXYLIC ACID GROUPS, AND PRODUCTS OF SAID METHOD
PROCEDE POUR LE PONTAGE DE SILANES OU D'UNITES RESINE DE SILANE ORGANIQUEMENT POLYMERISABLES ET CONTENANT DES GROUPES HYDROXY OU ACIDE CARBOXYLIQUE, AINSI QUE PRODUITS DE CE PROCEDE

(30) Priorität: 19.04.2005 DE 102005018059
(43) Veröffentlichungstag der Anmeldung: 09.01.2008
(73) Patentinhaber: Fraunhofer-Gesellschaft zur Förderung der angewandten Forschung e.V., 80686 München (DE)
(72) Erfinder: WOLTER, Herbert, 97941 Tauberbischofsheim (DE)
(74) Vertreter: Leonhard, Frank Reimund
(86) Internationale Anmeldenummer: PCT/EP2006/003527
(87) Internationale Veröffentlichungsnummer: WO 2006/111352

(56) Entgegenhaltungen:
- DE-C1- 4 416 857
- US-A- 5 717 125
- US-B1- 6 222 055

## Beschreibung

Die vorliegende Erfindung betrifft ein Verfahren zur Herstellung neuartiger Silane mit zwei, drei oder sogar mehr Struktureinheiten, die über eine urethan-, säureamid- und/oder carbonsäureestergruppenhaltige Brücke miteinander verknüpft sind und von denen jede mindestens einen organisch polymerisierbaren Rest und mindestens einen Silylrest enthält. Diese Silane eignen sich insbesondere zur Modifizierung der Eigenschaften von Kieselsäure(hetero)polykondensaten und silylgruppenhaltigen, organischen Polymeren (ORMOCER®en).Das erfindungsgemäße Verfahren eignet sich auch zur Verbrückung bereits vorkondensierter Kieselsäure(hetero)polykondensate. Es handelt es sich dabei um eine Weiterbildung des Verfahrens, das in der DE 103 49 766.8 beschrieben und beansprucht ist.

Kieselsäureheteropolykondensate, erhältlich durch Hydrolyse und Kondensation von Silanen mit hydrolysierbaren Gruppen, sind seit langem bekannt (siehe z.B. DE PS 27 58 414). Solche Kondensate können zu vielerlei Produkten verarbeitet werden, beispielsweise zu Überzügen, Beschichtungen, Membranen oder Bulkmaterialien. Die zugrundeliegenden Silane können auch Doppelbindungen oder andere organisch reaktive Gruppen aufweisen, durch die sie in ein organisches Netzwerk einpolymerisiert werden können (siehe z.B. DE 40 11 044 C2 und DE 44 05 261 A1). Eine ganz spezifische Gruppe solcher Materialien lässt sich aus Kieselsäure-polykondensaten erhalten, die einen am Silicium gebundenen Rest aufweisen, der neben mindestens einer organisch reaktiven Gruppe zusätzlich eine freie Hydroxy- oder Carbonsäuregruppe enthält. Solche Kieselsäurepolykondensate sind in der DE 44 16 857 C1 beschrieben. Sie sind, allein oder in Mischungen oder zusammen mit anderen hydrolysierbaren, kondensierbaren oder polymerisierbaren Komponenten, für die Herstellung von kratzfesten Beschichtungen, Füll, Klebe- oder Dichtungsmassen, Formkörpern oder Einbettmaterialien geeignet. Die Gruppe der in der DE 44 16 857 C1 beschriebenen Verbindungen zeichnet sich ferner dadurch aus, dass der Abstand zwischen Silicium und reaktiver bzw. reaktiven Doppelbindung(en) beliebig einstellbar ist, weshalb die physikalischen Eigenschaften der damit erhaltenen Kondensate bzw. Polymerisate in weiten Bereichen einstellbar sind.

Die Carbonsäuregruppe der carbonsäuremodifizierten Silane der DE 44 16 857 C1 sind Ladungsträger und ermöglichen damit beispielsweise die Herstellung von Dispersionen bzw. Emulsionen oder von Elektrotauchlackierungen. Außerdem können diese Gruppen mit geeigneten Metallverbindungen des Titans, Zirkons, Zinns und anderen komplexiert werden. Die Kombination von Carboxylgruppen mit polymerisierbaren C=C-Doppelbindungen in Verbindung mit dem anorganischen Silanteil stellt eine ideale Verbindung zum Einsatz als Polyalkensäuren in lonomerzementen dar. Allerdings werden in manchen Fällen Systeme mit einer geringeren Matrixhydrophilie als derjenigen der Kondensate benötigt, die man aus den Verbindungen der DE 44 16 857 C1 erhält. Aufgabe der in der DE 103 49 766.8 offenbarten Erfindung war es, solche Systeme sowie die dafür benötigten Silane bereitzustellen. Gelöst wurde diese Aufgabe unter anderem durch die Bereitstellung von Silanen der Formel (I) 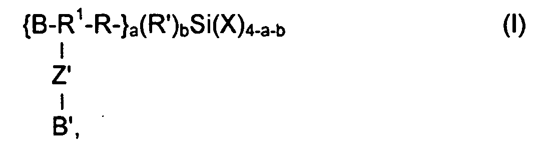 worin die Reste und Indices die folgende Bedeutung haben:
R ist eine offenkettige und/oder cyclische Alkylen-, Arylen- oder Alkylenarylengruppe mit jeweils 1 bis 10 Kohlenstoffatomen, die in manchen Fällen durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann, R¹ ist eine offenkettige und/oder cyclische Alkylen-, Arylen- oder
Alkylenarylengruppe mit jeweils 1 bis 10 Kohlenstoffatomen, die in manchen Fällen durch eine oder mehrere Sauerstoff- oder Schwefelatome oder Carboxyl- oder
Aminogruppen unterbrochen sein oder solche Atome/Gruppen an einem ihrer Enden tragen kann und die, wie aus der Formel (I) ersichtlich, die Gruppe Z' als Substituenten trägt, R' ist eine offenkettige und/oder cyclische Alkyl-, Alkenyl-, Aryl-, Alkylaryl- oder
Arylalkylgruppe mit vorzugsweise 1 bis 10 Kohlenstoffatomen, B und B' können gleich oder verschieden sein; beide Reste können die Bedeutung einer geradkettigen oder
verzweigten organischen Gruppe mit mindestens einer C=C-Doppelbindung und
mindestens 2, vorzugsweise bis zu 50 Kohlenstoffatomen haben, B' kann statt dessen aber auch -R²ₐSiX₄₋ₐ oder -R²ₐR'_{b}SiX_{4-a-b} bedeuten, worin R² eine Alkylengruppe mit 1 bis 10 Kohlenstoffatomen und X wie nachstehend definiert ist. X ist eine Gruppe, die unter Ausbildung von Si-O-Si-Brücken eine hydrolytische Kondensationsreaktion eingehen kann. Gruppen X werden als anorganische Netzwerkbildner bezeichnet, da sich bei der hydrolytischen Kondensationsreaktion ein Kieselsäurepolykondensat-Netzwerk ausbilden kann. Z' hat die Bedeutung -NH-C(O)O-, -NH-C(O)- oder -CO(O)-,
wobei die beiden erstgenannte Reste über die NH-Gruppe am Rest B' gebunden sind,
während die Carboxylatgruppe in beide Richtungen weisen kann, wobei dann, wenn Z' eine -(CO)O-Gruppe ist, deren Kohlenstoffatom am Rest B' gebunden ist, die

Gruppierung B'-Z'- nicht die Bedeutung einer Acrylatgruppe haben darf, wenn B eine Acrylatgruppe enthält, und die Gruppierung B'-Z'- keine Methacrylatgruppe darstellen darf, wenn B eine Methacrylatgruppe enthält, a bedeutet 1 oder 2, vorzugsweise 1, und b kann 0 oder 1 sein.

Die DE 103 49 877.8 stellt damit Silane und davon abgeleitete Kieselsäurepoly(teil)kondensate bereit, die unter Verwendung von Strukturelementen aufgebaut sind, welche einen teilweise oder vollständig hydrolysierbaren/hydrolysierten und/oder kondensierbaren/kondensierten Silanrest, mindestens eine Urethan-, Säureamid- oder Carbonsäureestergruppe und entweder mindestens zwei verzweigt angeordnete, C=C-Doppelbindungen enthaltende, organisch polymerisierbare Reste, von denen einer über die genannte Urethan-, Säureamid- oder Carbonsäureestergruppe an das Siliciumatom gebunden ist, oder einen solchen organisch polymerisierbaren Rest und einen über die genannte Urethan-, Säureamid- oder Carbonsäureestergruppe an diesen organischen Rest gebundenen weiteren, ein Siliciumatom enthaltenden Rest aufweisen.

Wie weiter unten ausführlich erläutert, kann man die Silane und davon abgeleiteten Kieselsäurepoly(teil)kondensate der DE 103 49 877.8 ausgehend von Silanen erhalten, die einen Rest B sowie eine an einem Linker zwischen diesem Rest B und dem Siliciumatom gebundene Hydroxy- oder Carboxylgruppe aufweisen. Diese sind in der DE 44 16 857 C1 beschrieben.

Über die organisch polymerisierbaren Anteile der Reste B und ggf. auch B' sind derartige Kieselsäurepolykondensate organisch vernetzbar. Dabei wird wegen des Vorhandenseins von mindestens zwei organisch vernetzbaren Gruppen pro Silanmolekül ein System erhalten, dessen organischer Anteil zu einer besonders hohen mechanischen Festigkeit sowie einem verbesserten Schrumpfverhalten mit einer verringerten Schrumpfung führt. Wenn B' statt dessen -R²ₐSiX₄₋ₐ oder R²ₐR'_{b}SiX_{4-a-b} ist, kann das Siliciumpolykondensat in dieser Ausgestaltung wegen des Vorhandenseins eines weiteren Siliciumatoms ein besonders dichtes Si-O-Si-Netzwerk ausbilden.

Erhältlich sind die Verbindungen und (Teil-)Kondensate der DE 103 49 877.8 beispielsweise ausgehend von Verbindungen der Formel (IIa) 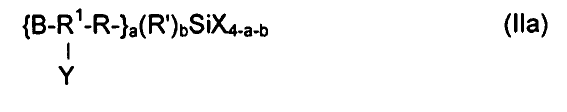 worin B, R¹, R, R', X a und b die für die Formel (I) angegebenen Bedeutungen besitzen und Y OH oder COOH ist. Die am Siliciumatom befindlichen Substituenten oder Reste R' und X können beliebig ausgewählt werden. In der Literatur über die anorganisch-organischen, Siliciumatome enthaltenden Materialien, z.B. diejenigen, die unter der Bezeichnung "ORMOCER®e " im Handel sind, ist viel über die Eigenschaften geschrieben worden, die die jeweiligen Silanreste dem Kondensat oder organisch polymerisierten Netzwerk verleihen, so daß hier keine detaillierten Erläuterungen nötig sind. Verbindungen der Formel (IIa) sind bekannt. So lassen sich beispielsweise gemäß der DE 44 16 857 C1 Verbindungen der Formel (IIa) herstellen, in denen B die Bedeutung B"-Z- besitzt, wobei auch B" die Bedeutung einer geradkettigen oder verzweigten organischen Gruppe mit mindestens einer C=C-Doppelbindung und 2 bis vorzugsweise 50 Kohlenstoffatomen mit den für B beschriebenen bevorzugten Ausgestaltungen besitzt und Z eine -O-C(O)-, -S-C(O) oder -NH-C(O)-Gruppe ist, und zwar durch Additionsreaktionen cyclischer Carbonsäureanhydrid-Silane beliebiger Ringgröße mit Verbindungen B"(AH), worin AH eine Hydroxy-, eine Mercapto- oder eine Aminogruppe ist, wobei man Produkte erhält, in denen Y -COOH bedeutet. Setzt man statt dessen Epoxid-Silane mit Verbindungen B"(AH) um, in denen AH eine Hydroxy-, eine Mercapto- oder eine Aminogruppe oder ein Carbonsäurerest ist, erhält man Produkte, in denen Y -OH bedeutet und Z -O-R", -S-R", -NH-R", -C(O)O-R", -O-, -S-, -NH- oder -C(O)O- ist. R" besitzt dabei die oben angegebene Bedeutung. Die Umsetzung erfolgt in der Regel katalysatorfrei im Falle der Umsetzung mit Carbonsäureanhydrid-Silanen und meist in Gegenwart eines geeigneten Katalysators, z.B. tertiärer Amine wie Triethylamin oder Phosphine wie Triphenylphosphin, und ggf. bei erhöhten Temperaturen, wenn ein Epoxid-Silan eingesetzt wird.

Bei den voranstehend beschriebenen Umsetzungen zur Herstellung der Verbindungen der Formel (IIa) können je nach tatsächlich eingesetzten Ausgangsmaterialien Isomere und Umesterungsprodukte dieser Verbindungen entstehen. Dies ist insbesondere dann in erheblichem Maße der Fall, wenn die Reste X Alkoxygruppen, vor allem Methoxy- oder Ethoxygruppen sind. Da in solchen Isomeren und Umesterungsprodukten teilweise die Gruppe Y in die Isomerisierungs-/Umesterungsreaktion involviert ist, ist sie in diesen Produkten teilweise nicht mehr frei. Es hat sich aber herausgestellt, das diese Nebenprodukte genauso gut für die Herstellung der Kondensate der DE 103 49 877.8 herangezogen werden können, wie die Verbindungen der Formel (IIa) selbst, wobei eine Trennung der verschiedenen Produkte gar nicht notwendig ist. Es ist statt dessen ausreichend, die für die Herstellung der Verbindungen mit der Formel (IIa) beschriebenen Ausgangsmaterialien miteinander in der angegebenen Weise umzusetzen und anschließend einer Hydrolyse zu unterwerfen. Überraschenderweise wird dabei die Gruppe Y wieder frei, während die Rückbildung von SiOH-Gruppen unterschiedlich stark ausfällt und im wesentlichen unterdrückt werden kann. Deshalb erhält man in der Regel ein Kondensat mit einem Si-O-Si-Netzwerk.

Die Verbindungen der Formel (IIa) bzw. ihre Kondensationsprodukte mit wieder freigesetzter Gruppe Y werden bei Bedarf aufgearbeitet (z.B. getrennt, gewaschen, isoliert) und/oder, wenn erforderlich, getrocknet. Insbesondere sollte dabei ggf. darauf geachtet werden, dass keine oder möglichst wenig H-aktive Verunreinigungen im Reaktionsgemisch vorhanden sind, um in der nachstehend beschriebenen Umsetzung Nebenreaktionen mit dem Isocyanat zu vermeiden. Sodann können sie mit einem Isocyanat umgesetzt werden, wobei dann, wenn Y OH bedeutet, ein Produkt entsteht, in welchem Z' eine Urethangruppe -NH-C(O)O- ist, und wenn Y COOH bedeutet, Z' eine Säureamidgruppe -C(O)-NH- ist. Alternativ werden sie mit einer Carbonsäure oder einer aktivierten Carbonylgruppe (z.B. einem Säurechlorid oder -anhydrid) (für Y gleich OH) oder einem Alkohol (für Y gleich COOH) nach gängigen Verfahren, z.B. in Gegenwart von Aktivierungsmitteln wie Dicyclohexylcarbodiimid, umgesetzt, wobei eine Estergruppe -C(O)O- entsteht, die je nach Ausgangssubstanzen in die eine oder in die andere Richtung weisen kann.

Die Herstellung der Verbindungen gemäß DE 103 49 766.8 erfolgt nach einem Reaktionsschema, das sich folgendermaßen definieren läßt:

Eine Verbindung mit der Formel (IIa) oder ein Isomer, ein Umesterungsprodukt oder ein durch Verlust eines Alkoholmoleküls entstandenes Kondensationsprodukt davon wie oben beschrieben wird mit einer Verbindung B'Q umgesetzt, worin B' die für Formel (I) angegebene Bedeutung besitzt und Q entweder die Bedeutung -NCO besitzt, oder für den Fall, dass Y -COOH ist, -OH bedeuten kann, oder für den Fall, dass Y OH ist, -C(O)X bedeuten kann, wobei C(O)X' eine Carbonsäuregruppe oder eine aktivierte Carbonylverbindung, insbesondere ein Säurechlorid oder ein Säureanhydrid ist.

Wenn Y in der Verbindung mit der Formel (IIa) OH bedeutet, wird bei einer Umsetzung mit einer Verbindung B'Q, in der Q -NCO ist, eine Verbindung mit der Formel (I) gebildet, worin B'-Z' B'-NHCOO- ist. Wenn Y in der Verbindung mit der Formel (IIa) -COOH bedeutet, entsteht bei der Umsetzung mit B'NCO eine Verbindung mit der Formel (I), worin B'-Z'- B'-NH-C(O)- ist. Wenn Y in der Verbindung mit der Formel (IIa) -COOH bedeutet, wird bei einer Umsetzung mit einer Verbindung B'OH ein Silan der Formel (I) erhalten, dessen Strukturelement B'-Z'- B'-O-C(O)- ist. Wenn Y in der Verbindung mit der Formel (IIa) OH bedeutet, entsteht bei einer Umsetzung mit einer Verbindung B"COOH oder einem entsprechenden aktivierten Säurederivat eine Silan, dessen Strukturelement B'-Z' B'-C(O)O- bedeutet.

Ausgehend von der Lehre der DE 103 49 766.8 wird gemäß der vorliegenden Erfindung ein Verfahren bereitgestellt, mit dem man oligomere Silane mit einer genau vorbestimmten Anzahl von anorganisch kondensierbaren Silylresten und von organisch polymerisierbaren Gruppen herstellen kann, die sich als Zusatz zu sowohl organisch polymerisierbaren als auch anorganisch kondensierbaren Silanen wie eingangs beschrieben und/oder zu Prekondensaten/Prepolymerisaten solcher Silane eignen, um den Vernetzungsgrad der daraus erhältlichen Harze bzw. Polymere ("ORMOCER®e") zu steuern. Mit dem Zusatz dieser Silane zu hydrolytisch kondensierbaren, ggf. auch organisch polymerisierbaren Silanen lassen sich z.B. die rheologischen Eigenschaften (Viskosität, Fließverhalten) im resultierenden (anorganisch kondensierten, noch nicht oder noch nicht vollständig organisch polymerisierten) Harz (lösungsmittelfrei) oder Lack (lösungsmittelhaltig) variieren oder einstellen, was für eine Applikation in der Regel sehr wichtig sind. Außerdem können die späteren Produkteigenschaften wie Festigkeit oder E-Modul der durch Kondensation und organischer Vernetzung erhaltenen Polymere beeinflusst, variiert und in geeignerer Weise eingestellt werden.

Bei dem erfindungsgemäßen Verfahren werden Silane der Formel (IIa) wie oben definiert oder teilweise oder vollständig kondensierte Kondensate davon und/oder über einen Teil oder alle der enthaltenen organischen Reste B polymerisierte Polymere daraus umgesetzt mit einer Verbindung (IV)

Q-R⁵[-Q']_{c}, (IV)

worin Q und jedes Q' unabhängig voneinander-NCO, -OH oder -C(O)X', worin -C(O)X' eine Carbonsäuregruppe oder eine aktivierte Carbonylverbindung, insbesondere eine Säurechlorid oder ein Säureanhydrid ist, bedeuten und Q und/oder Q' -NCO oder -C(O)X' sein kann, wenn die Silane der Formel (IIa) oder deren Kondensate/Polymerisate wie oben definiert Gruppen Y mit der Bedeutung -OH enthalten, und worin Q und/oder Q' -NCO oder -OH- sein kann, wenn die Silane der Formel (IIa) oder deren Kondensate/Polymerisate wie oben definiert Gruppen Y mit der Bedeutung -COOH enthalten. Q kann auch Teil eines cyclischen, intramolekularen Anhydrids oder ein intermolekulares, gemischtes Anhydrid (-C(O)O-C(O)-Alkyl, -Aryl oder -Alkylaryl/Arylalkyl)) sein. R⁵ kann in Ausnahmefällen (nämlich nur dann, wenn Q und Q' jeweils aktivierte Carbonsäuregruppen sind und c gleich 1 ist, d.h. nur in dem Falle, in dem die Verbindung mit der Formel (IV) Oxalsäure oder ein aktiviertes Oxalsäurederivat ist) eine Einfachbindung sein und ist im Übrigen "Spacer", d.h. ein beliebiger Rest mit c+1 Valenzen. Vorzugsweise besitzt oder ist R⁵ eine ggf. durch Sauerstoffatome, Schwefelatome, Carbonylgruppen, Carboxylgruppen, Aminogruppen oder Amidgruppen unterbrochene Kohlenstoffkette, insbesondere eine Alkylenkette von 1 bis 60, stärker bevorzugt 1 bis 15 Kohlenstoffatomen,Statt dessen kann R⁵ einen oder mehrere, ggf. (eine) weitere solche Kohlenstoffkette(n) aufweisende Ringe (Cycloalkylring, aromatischer Ring, mit oder ohne Heteroatome) enthalten oder eine reine Ringstruktur aufweisen, z.B. eine Phenylengruppe, eine Naphthylengruppe oder eine Diphenylengruppe sein. Diese Ringe bzw. diese Kohlenstoffketten können weiterhin ggf. substituiert sein, sofern ihre Substituenten nicht mit der Reaktion zwischen Q und Y interferieren. Ein Beispiel hierfür ist eine Cyano- oder Tricyanostruktur. c ist bevorzugt 1, kann aber auch 2, 3, 4, 5 oder 6 sein. Z.B. sind Di-Tri- oder Tetra-Anhydride, -Carbonsäuren (ggf. aktiviert bzw. aktivierbar), -Isocyanate oder -Alkohole in großem Umfang käuflich. Auch natürliche Oligomere können für die vorliegende Erfindung eingesetzt werden wie Zuckermoleküle. In Ausnahmefällen kann c sogar eine höhere Zahl als 6 bedeuten.

Wenn Q und/oder Q' Teil eines cyclischen Anhydrids sind, ist R⁵ über ein Kohlenstoffatom mit Q bzw. Q' verbunden, das den Rest des cyclischen Anhydrids trägt.

Bevorzugt sind Q und Q' identisch.

Die Verbindung mit der Formel (IV) kann spiegelsymmetrisch sein, muss es aber nicht.

In einer ersten Ausgestaltung der Erfindung führt das erfindungsgemäß Verfahren zu neuen Silanen mit der Formel (V) 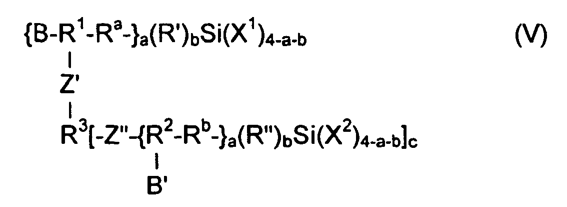 worin die Reste und Indices die folgende Bedeutung haben:
Alle Reste R^{a} und R^{b} können gleich oder verschieden sein und sind unabhängig voneinander jeweils eine offenkettige und/oder cyclische Alkylen-, Arylen- oder
Alkylenarylengruppe mit jeweils 1 bis 10 Kohlenstoffatomen, die in manchen Fällen durch eine oder mehrere Sauerstoff- oder Schwefelatome oder Carboxyl- oder
Aminogruppen unterbrochen sein oder solche Atome/Gruppen an ihrem dem Siliciumatom abgewandten Ende tragen kann.

Alle Reste R¹ und R² können gleich oder verschieden sein und sind unabhängig voneinander jeweils eine offenkettige und/oder cyclische Alkylen-, Arylen- oder Alkylenarylengruppe mit jeweils 1 bis 10 Kohlenstoffatomen, die in manchen Fällen durch eine oder mehrere Sauerstoff- oder Schwefelatome oder Carboxyl- oder Aminogruppen unterbrochen sein oder solche Atome/Gruppen an einem ihrer Enden tragen können und die, wie aus der Formel (V) ersichtlich, die Gruppe Z' bzw. Z" als weiteren Substituenten tragen.

Alle Reste X¹ und X² können gleich oder verschieden sein und sind unabhängig voneinander jeweils Gruppen, die unter Ausbildung von Si-O-Si-Brücken eine hydrolytische Kondensationsreaktion eingehen kann. X¹ und X² sind also hydrolysierbare Reste. Sie werden als anorganische Netzwerkbildner bezeichnet, da sich bei der hydrolytischen Kondensationsreaktion ein Kieselsäurepolykondensat-Netzwerk ausbilden kann. Mit diesen Gruppen werden im Zusammenspiel mit ggf. vorhandenen organischen Netzwerkbildnern, hier also insbesondere den organisch polymerisierbaren Gruppen der Reste B und ggf. B', physikalische Eigenschaften des sich bildenden Netzwerks eingestellt wie Härte bzw. Flexibilität oder der thermische Ausdehnungskoeffizient. In der Literatur über die anorganisch-organischen, Siliciumatome enthaltenden Materialien, z.B. diejenigen, die unter der Bezeichnung "ORMOCER®e" im Handel sind, ist viel über die jeweiligen Eigenschaften geschrieben worden, die die jeweiligen Silanreste dem Kondensat oder organisch polymerisierten Netzwerk verleihen, so dass hier keine detaillierten Erläuterungen nötig sind. Vorzugsweise ist X eine C₁-C₁₀-Alkoxygruppe, stärker bevorzugt eine C₁-C₄-Alkoxygruppe und ganz besonders bevorzugt Methoxy oder Ethoxy. X kann aber auch je nach Bedarf ein Halogenid wie Cl, Wasserstoff, Hydroxy, Acyloxy mit vorzugsweise 2 bis 5 Kohlenstoffatomen, Alkylcarbonyl mit vorzugsweise 2 bis 6 Kohlenstoffatomen, Alkoxycarbonyl mit vorzugsweise 2 bis 6 Kohlenstoffatomen, ggf. auch NR" mit R" gleich Wasserstoff, Alkyl mit vorzugsweise 1-4 Kohlenstoffatomen oder Aryl mit vorzugsweise 6-12 Kohlenstoffatomen, oder eine andere geeignete Abgangsgruppe sein.

Alle Reste R' und R" können gleich oder verschieden sein und sind unabhängig voneinander jeweils eine offenkettige und/oder cyclische Alkyl-, Alkenyl-, Aryl-, Alkylaryl- oder Arylalkylgruppe mit vorzugsweise 1 bis 10 Kohlenstoffatomen, die in Ausnahmefällen organisch polymerisierbare Reste tragen können. Soweit die Reste R' und R" nicht organisch polymerisierbar sind, werden sie als Netzwerkwandler bezeichnet; mit ihrer Wahl lassen sich ebenfalls eine Reihe von Eigenschaften beeinflussen.

Alle Reste B und B' können gleich oder verschieden sein; beide Reste können die Bedeutung einer geradkettigen oder verzweigten organischen Gruppe mit mindestens einer C=C-Doppelbindung und mindestens 2, vorzugsweise bis zu 50 Kohlenstoffatomen haben. Die Reste B und B' tragen beliebige organisch polymerisierbare Gruppen. Die mindestens eine C=C-Doppelbindung in B bzw. B' kann beispielsweise Bestandteil einer Vinyl-, Allyl-, Norbornen-, Acryl- und/oder Methacrylgruppe sein. In einer bevorzugten Ausgestaltung trägt jeder der Reste B und B' ein Michaelsystem, besonders bevorzugt eine Acrylat- oder Methacrylatgruppe. In einer weiteren bevorzugten Ausgestaltung trägt der Rest B zwei oder sogar drei Michaelsysteme, z.B. Acrylat- oder Methacrylatgruppen. Besonders zu nennen sind Reste B und B', die als Strukturelemente C₂-C₄-Alkandiole, die Trimethylolpropangruppe, die Pentaerythritgruppe oder die Glycerolstruktur enthalten. B und B' können Acrylsäureestergruppen und oder Methacrylsäureestergruppen des Trimethylolpropan, der Glycerins, des Pentaerythrits, der C₂-C₄-Alkandiole, der Polyethylenglycole, der Polypropylenglycole oder des gegebenenfalls substituierten und/oder alkoxylierten Bisphenol A sein oder diese Ester umfassen. Ebenfalls bevorzugt ist es, dass B und ggf. B' nur eine (Meth)acrylatgruppe enthalten, die über eine Esterbindung des Carboxylrestes an das übrige Molekül gebunden ist. B und B' können ein durchgehendes Kohlenstoffskelett aufweisen, die Kohlenstoffkette(n) (Haupt- und/oder Seitenkette(n) können aber auch durch Heteroatome bzw. Gruppen wie O, S, SO, NH, NHCO, PR, POR, CONHCO, COO, NHCOO oder dergleichen unterbrochen sein. Das Kohlenstoffskelett von B oder B' kann ausschließlich aliphatisch sein, und zwar mit offenen und/oder geschlossenen Strukturen, B und B' können aber auch einen oder mehrere aromatische(n) Kern(e) oder kondensierte Systeme oder Triazingruppen oder dgl. aufweisen, z.B. Bisphenol-A-Strukturen oder dergleichen. Ferner können die Gruppen oder Strukturen beliebig substituiert sein, z.B. mit Säure-, Säureamid-, Ester- oder Aminogruppen.

Alle Gruppen Z' und Z" haben unabhängig voneinander die Bedeutung -NH-C(O)O-, -NH-C(O)- oder -CO(O)-, wobei die beiden erstgenannte Reste über die NH-Gruppe am Rest R³ gebunden sind, während die Carboxylatgruppe in beide Richtungen weisen kann.

Prinzipiell kann R³ dieselbe Bedeutung haben wie R⁵ in der oben angegebenen Formel (IV); d.h. diese Gruppe besitzt bei c größer 1 eine entsprechende Anzahl von Bindungen zu den Resten

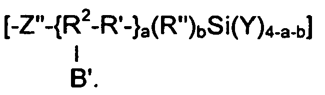

Allerdings ist zu bemerken, dass bei einer Umsetzung einer Verbindung mit der Formel (IV), in der Q und/oder Q' Teil eines cyclischen Anhydrids sind, eine Verbindung mit der Formel (V) entsteht, in der R³ an seiner zur Gruppe Z' bzw. Z" benachbarten Gruppe dann natürlich eine Carbonsäuregruppe tragen muss.
a bedeutet 1 oder 2, vorzugsweise 1, und b kann 0 oder 1 sein.
c ist bevorzugt 1, kann aber auch 2, 3 oder 4 sein. In Ausnahmefällen kann c auch 5 oder 6 oder eine größere ganze Zahl sein.

Unter den Ausdrücken "(Meth-)Acrylat", "(Meth-)Acrylsäurerest" und dergleichen soll vorliegend zu verstehen sein, dass wahlweise ein Methacrylat oder ein Acrylat bzw. wahlweise ein Methacrylsäurerest oder ein Acrylsäurerest vorhanden ist, oder dgl..

Alle in dieser Anmeldung genannten offenkettigen Kohlenwasserstoffgruppen oder -reste können gerad- oder verzweigtkettig sein.

In bevorzugten Ausgestaltungen der Erfindung sind die Bedeutungen R' und R" identisch. Statt dessen oder zusätzlich können die Bedeutungen von R^{a} und R^{b} und (ggf. auch/oder) die Bedeutungen von R¹ und R² identisch sein. Unabhängig davon können auch die Bedeutungen von B und B' identisch sein; in einer Reihe von Ausführungsformen der Erfindung sind sie es jedoch nicht.

Gemäß einer bevorzugten Ausgestaltung der Erfindung werden mit dem erfindungsgemäßen Verfahren Silane der Formel (V) erzeugt, worin B und/oder B' die Bedeutung B"-Z- besitzen und Z eine -O-C(O)-, -S-C(O) oder -NH-C(O)-Gruppe ist, wenn Z' und oder Z" -NH-CO- sind, und Z -O-R⁴, -S-R⁴, -NH-R⁴, -C(O)O-R⁴, -O-, -S-, -NH- oder -C(O)O- ist, wenn Z' und/oder Z" -NH-C(O)O- ist. R⁴ kann dabei die Bedeutung Alkylen, Arylen oder Alkylarylen mit vorzugsweise 1 bis 10 (für ringfreie Gruppen) bzw. 6 bis 14 (für ringhaltige Gruppen) Kohlenstoffatomen haben. B" ist dabei wie B und B' eine geradkettige oder verzweigte organische Gruppe mit mindestens einer C=C-Doppelbindung und 2 bis vorzugsweise 50 Kohlenstoffatomen. B" besitzt bevorzugt die auch für B und B' als bevorzugt genannten Bedeutungen.

Die erfindungsgemäßen Silane der Formel (V) sowie noch nicht vollständig durchkondensierte Kieselsäurepoly(teil)kondensate davon können allein oder ggf. auch mit weiteren Silanen und/oder Kieselsäure(teil)kondensaten teilweise, weiter oder vollständig hydrolysiert und kondensiert werden. Als weitere Silane oder Kieselsäure(teil)kondensate eignen sich zum einen Silane und (Teil-)Vorkondensate daraus, die cokondensierbar, aber nicht copolymerisierbar sind, oder solche, die ebenfalls über polymerisierbare Gruppen verfügen. Durch die Vernetzung mit den erfindungsgemäßen Silanen werden 2, 3 oder noch mehr anorganisch kondensierbare oder organisch polymerisierbare bzw. anorganisch kondensierte und organisch polymerisierbare Molekülstrukturen miteinander verbunden, was letztlich zu einer erheblichen Steigerung der Vernetzungsdichte sowie des Molekulargewichts führt und damit einen drastischen Einfluss auf die Materialeigenschaften hat. So wird z.B. schon durch einen kleinen Anteil von mittels 1,6-Diisocynatooctan vernetztem funktionalisiertem Siloxan mit der Formel (V) (siehe auch Beispiel 1) eine erhebliche Steigerung der Festigkeit sowohl nach Trocken- wie auch nach Nasslagerung nach organischer Polymerisation gegenüber dem entsprechenden, nicht vernetzten Material beobachtet. Die Vernetzungseinheit ist organischer Natur und variable in Länge, Struktur und Zusammensetzung, weshalb auch damit die Eigenschaftsprofile gezielt modifiziert werden können (zusätzlich zu den beiden anorganisch und organisch polymerisierbaren Molekülteilen). So lassen sich z.B. aromatische Strukturen zur Steigerung der Brechzahl und zur Versteifung verwenden und weitere funktionelle Gruppen einführen.

Außerdem sind die Verbindungen der Formel (V) wertvoll als Zusatz (Modifikatoren) in zumindest teilweise anorganisch kondensierten, jedoch noch nicht oder nur teilweise polymerisierten Harzsystemen aus den oben angegebenen Silan-Komponenten sowie ggf. weiteren Bestandteilen, in denen sie zur Steuerung der rheologischen Eigenschaften wie Viskosität oder Fließverhalten eingesetzt werden können, wie bereits voranstehend ausführlich beschrieben.

Weiterhin lässt sich mit Hilfe des erfindungsgemäßen Verfahrens die Härtung von anorganisch kondensierbaren und ggf. organisch polymerisierbaren Silanen, die die Formel (IIa) wie oben definiert besitzen, also eine freie (oder ggf. geschützte/umgeesterte) Hydroxy- oder Carboxylgruppe aufweisen, äußerst dosiert abstufen, indem eine in Bezug auf die Y-Gruppen der Verbindungen bzw. (Teil-)Kondensate mit der Formel (IIa) stöchiometrische oder im gewünschten Umfang unterstöchiometrische Menge der Verbindung (IV) zugesetzt wird. Mit Hilfe der so bewirkten Vernetzung bzw. eines im gewünschten Ausmaß erfolgenden Vernetzungsanteils kann man nicht nur die späteren Produkteigenschaften des über die Gruppen B, B' organisch polymerisierten Polymeren wie Festigkeit oder E-Modul variieren und im gewünschten Rahmen einstellen, sondern auch gewünschte rheologische Eigenschaften wie Fließverhalten oder Viskosität des erst anorganisch (teil)kondensierten Harzes oder Lackes einstellen, die für viele Applikationen damit maßgeschneidert werden können. Diese Möglichkeit zur Verfügung zu haben, ist sehr wichtig. Außerdem ist auf diesem Wege eine um eine zusätzliche Stufe erweiterte Härtung möglich, was in bestimmten Fällen sehr nützlich sein kann: So kann zum Beispiel in der 1. Stufe eine Vorkondensation der anorganisch kondensierbaren Silane der Formel (IIa) zu einem vorkondensierten Harz erfolgen, dessen Vernetzung anschließend (z.B. nach Applikation in Form einer Schicht) in einer 2. Stufe durch Anwendung des erfindungsgemäßen Verfahrens bei Raumtemperatur oder bei höherer Temperatur verstärkt wird (z.B. zu einer klebfreien Schicht). In einer möglichen 3. Stufe erfolgt dann eine Polymerisation der organisch polymerisierbaren Gruppen (z.B. radikalisch initiierte Polymerisation doppelbindungshaltiger Gruppen; Thiol-en-Polyaddition) (abschließende Härtung). Zumindest im Falle der Umsetzung von aus OH-haltigen Silanen erhaltenen Kondensaten erfolgt die 2. Stufe in der Regel durch eine zweikomponentige Verarbeitung, da im Falle der Reaktion einer OH-Gruppe mit einer OCN-Gruppe beim Zusammengeben in der Regel schon bei Raumtemperatur, wenn auch möglicherweise relativ langsam, eine Umsetzung erfolgt. Will man dies vermeiden, kann man allerdings eine verkappte -OCN-Verbindung zusetzen, deren -OCN-Gruppe bei höherer Temperatur wieder freigesetzt wird. Dann lässt sie das vorkondensierte Silanharz zusammen mit der Verbindung Q-R⁵[-Q']_{c} bei Raumtemperatur lagern, und die zweite Stufe der Reaktion wird dann bei Bedarf, z.B. nach Aufbringen des Harzes als Schicht auf eine Oberfläche oder ein Substrat, durch Anwendung von Wärme initiiert. Gegebenenfalls können in diesem Fall im Übrigen die Schritte 2 und 3 auch vertauscht werden.

Den Silanen der Formel (V) sowie noch nicht vollständig durchkondensierten Kieselsäurepoly(teil)kondensaten davon können zusätzlich copolymerisierbare, vorzugsweise rein organische Komponenten zugesetzt werden, bei denen es sich z.B. um radikalisch und/oder ionisch und/oder kovalent-nucleophil polymerisierbare Verbindungen handelt. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie z.B. Spiroorthoester, Spiroorthocarbonate, bicyclische Spiroorthoester, Mono- oder Oligoepoxide oder Spirosilane bzw. deren Kondensate, wie sie z.B. aus der DE 41 25 201 C1 bekannt sind. Es können aber auch Verbindungen zugesetzt werden, die sowohl ionisch als auch radikalisch polymerisierbar sind, wie z.B. Methacryloyl-Spiroorthoester. Diese sind radikalisch über die C=C-Doppelbindung und kationisch unter Ringöffnung polymerisierbar. Die Herstellung dieser Systeme ist z.B. im Journal f. prakt. Chemie, Band 330, Heft 2, 1988, S. 316-318 beschrieben. Ferner ist es z.B. möglich, andere bekannte Silan-gebundene cyclische Systeme zuzusetzen, die mit einpolymerisiert werden können. Solche Systeme sind z.B. solche, die Epoxide enthalten. Solche Systeme sind bei der Herstellung der Spiro-Silane in der DE 41 25 201 C1 beschrieben. Die vorgenannten Komponenten werden bei der Polymerisation der Harze über ihre organisch polymerisierbaren Gruppen einpolymerisiert, so dass man ein Copolymerisat aus erfindungsgemäßen Silanen und Copolymeren erhalten kann, dessen Silangruppen untereinander oder mit weiteren Gruppen hydrolytisch (teil-)kondensiert vorliegen. Weitere Modifikationsmöglichkeiten ergeben sich durch Einsatz der erfindungsgemäßen Silane mit der Formel (V) in Massen, wie sie beispielsweise in den europäischen Patentschriften EP 668 326 B1, EP 618 242 B1 und in der deutschen Patentschrift DE 41 33 494 C2 beschrieben sind.

Insbesondere aufgrund der besonders sensibel handhabbaren Verarbeitung durch die Möglichkeit, die drei Herstellungsschritte voneinander zu trennen und zeitlich je nach Bedarf durchzuführen, eignen sich die aus oder unter Verwendung der Silane der Formel (V) bzw. die unter Einsatz der Verbindungen O-R⁵[-Q']_{c} erzeugten (Pre-)Kondensate/(Pre-)polymerisate aus oder mit Silanen der Formel (IIa) z.B. als bzw. zur Herstellung von Beschichtungs-, Füll-, Klebe-, Verguss- und Dichtungsmassen, Fasern, Partikeln, Folien, Bindemittel für keramische Partikel, oder als Einbettmassen, aus denen sich sehr kratzfeste Beschichtungen und Formkörper mit hoher Festigkeit fertigen lassen. Insbesondere kann man ungefüllte Polymermassen (Polymerisate) sowie (gefüllte) Komposite erhalten, die aus Harzen mit relativ geringer Viskosität erhalten wurden und die eine sehr geringe Schrumpfung aufweisen. Es sei auch auf solche Ausgestaltungen verwiesen, in denen die Harze bzw. Polymerisate oder Komposite monomerfrei und damit toxikologisch/ allergologisch unbedenklich sind, vor allem, wenn sie darüber hinaus eine hohe Nassfestigkeit besitzen (siehe oben).

In einer speziellen Ausgestaltung der Erfindung wird das Kieselsäurepoly(teil)kondensat mit einem oder mehreren Zusatz- und/oder Füllstoffen gemischt, und zwar vorzugsweise vor der 2. Stufe der Aushärtung wie oben erwähnt, ggf. aber auch zwischen der 2. und 3. Stufe.

Die Materialien für derartige Füllstoffe sind nicht kritisch und werden je nach Bedarf ausgewählt. Gut geeignet sind z.B. solche, wie sie in den Füllstoffen der Druckschriften DE 196 43 781, DE 100 41 038 oder DE 100 18 405 eingesetzt werden. Sehr gut geeignet sind SiO₂-Partikel, die man beispielsweise nach bekannten Sol-Gel-Verfahren erhalten kann und die dann eine sehr enge Durchmesserverteilung aufweisen können. Diese oder auch anders zusammengesetzte Partikel können auf ihrer Oberfläche modifiziert, z.B. silanisiert sein, um ihre Oberflächeneigenschaften an diejenigen der Matrix anzupassen.

Verwendbar als weitere Füllstoffe sind u.a. Makrofüller (z.B. aus Glas, Keramik oder Quartz, Teilchengrößen zwischen 2 bis 50 µm), homogene Mikrofüller (beispielsweise aus pyrogener Kieselsäure, Teilchengrößen ca. 0,04 µm), inhomogene Mikrofüller (Beispiel: ein Teil der pyrogenen Kieselsäure liegt als Splitterpolymerisat vor), Hybridfüller (Mischungen von Makro- und Mikrofüllern) oder Feinsthybridfüller (z.B. Mischungen aus Aerosil und Ba- oder Sr-Glas mit Teilchengrößen im Bereich von etwa 1 bis 5 µm). Sehr gut geeignet für die vorliegende Erfindung sind beispielsweise Glaspartikel mit Teilchendurchmessern von ca. 1-5 µm, oder Glasfasern.

Alternativ oder zusätzlich lassen sich nanopartikuläre Füllstoffe verschiedener Größe oder verschiedener Zusammensetzung einsetzen. Unter "nanopartikulär" ist dabei zu verstehen, dass die Füllstoffe einen Durchmesser oder ihren größten Durchmesser im Bereich von unter 1000 nm aufweisen; bei Füllstoffen mit einer breiteren Korngrößenverteilung sollen wenigstens 90% der Masse des Füllstoffs unterhalb dieser Grenze liegen. Bevorzugt werden nanopartikuläre Füllstoffe mit annähernd sphärischer Form eingesetzt. Stärker bevorzugt werden Füllstoffe mit Durchmessern im Bereich von 10 bis 400 nm, noch stärker bevorzugt im Bereich von 10 bis 100 nm eingesetzt. Bevorzugt ist es außerdem, Füllstoffe mit einer engen Korngrößenverteilung einzusetzen.

Das Verhältnis der Füllstoffe untereinander kann beliebig gewählt werden. Günstig sind Gewichtsanteile des nanopartikulären Füllstoffs von etwa 5 bis etwa 60 Gew.-%, bezogen auf das Gesamtgewicht an Füllstoff im Komposit. Besonders günstig sind Anteile von über 5-30 Gew.-%. Es hat sich herausgestellt, dass beim Einsatz von Anteilen in diesem Bereich besonders hoch gefüllte Komposite erhältlich sind, die eine besonders geringe Schrumpfung und eine besonders hohe Abrasionsfestigkeit aufweisen.

Der Füllstoff kann je nach Anwendungsbereich in einer beliebigen Menge eingesetzt werden, die bis zu ca. 90% des Gesamtgewichts reichen kann.

Beispiele für sonstige Zusatzstoffe sind Färbemittel (Farbstoffe oder Pigmente), Oxidationsinhibitoren, Verlaufsmittel, UV-Absorber, Stabilisatoren oder Zusätze zur Erhöhung der Leitfähigkeit (z.B. Graphitpulver, Silberpulver).

Nachstehend soll die Erfindung anhand von Ausführungsbeispielen näher erläutert werden.

### Beispiel 1

Dieses Beispiel zeigt die Herstellung einer Verbindung der Formel (IIa) bzw. eines Umesterungsproduktes davon mit b gleich 1:

Umsetzung von 3-Glycidyloxypropylmethydiethoxysilan mit Methacrylsäure (MAS):

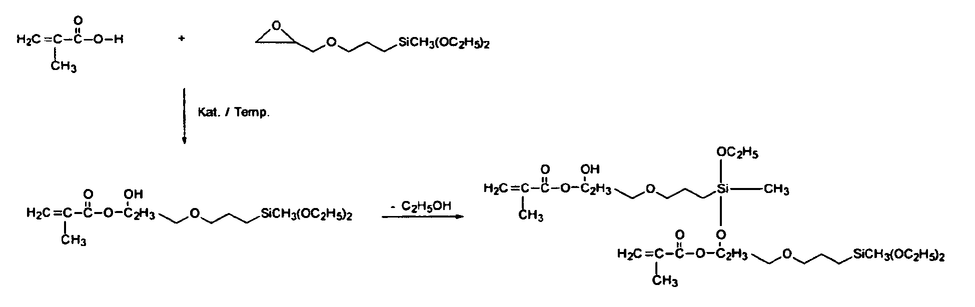

Zur Vorlage von 125,0 g (0,503 mol) 3-Glycidyloxypropyl-methyldimethoxysilan werden unter trockener Atmosphäre (Sauerstoff) Triphenylphosphan als Additionskatalysator, BHT als Stabilisator und anschließend 47,35 g (0,550 mol) Methacrylsäure zugetropft und bei 80°C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe vom Epoxysilan charakteristische Bande erscheint im Ramanspektrum bei 1256 cm⁻¹. Der Epoxid- bzw. Carbonsäureumsatz liegt bei ≥ 99 % bzw. ≥ 89 % (Folge des Carbonsäureüberschusses).

### Beispiel 2

Dieses Beispiel zeigt die Hydrolyse- und Kondensationsreaktion des Produktes aus Beispiel 1.

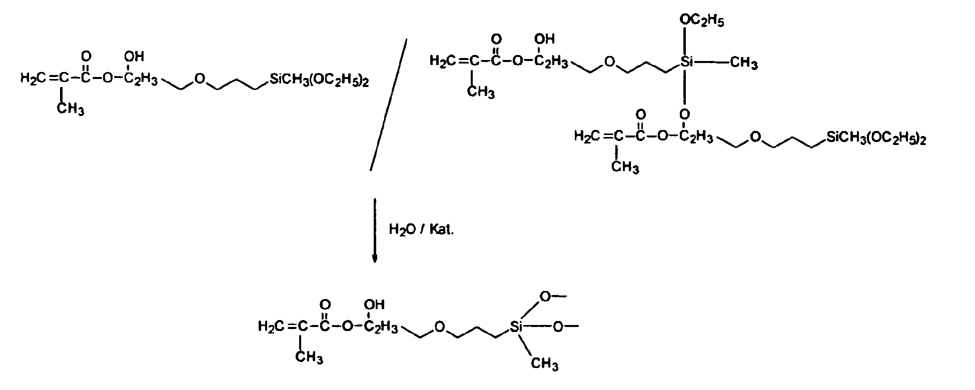

Nach Zugabe von Essigester (1000 ml/mol Silan) und H₂O zur Hydrolyse mit HCl als Katalysator wird bei 30°C gerührt. Der Verlauf der Hydrolyse wird jeweils durch Wassertitration verfolgt. Die Aufarbeitung erfolgt nach mehrtägigem Rühren durch mehrmaliges Ausschütteln mit wäßriger NaOH und anschließendem Ausschütteln mit Wasser und Filtration über einen hydrophobierten Filter. Es wird zunächst abrotiert, dann werden restliche Lösemittel (Alkohol, Wasser) im Ölpumpenvakuum abgezogen. Es resultiert ein flüssiges Harz ohne Einsatz von Reaktiwerdünneren (Monomeren) mit einer sehr geringen Viskosität von ca. 4 - 6 Pa·s bei 25 °C stark abhängig von den genauen Hydrolyse- und Aufarbeitungsbedingungen) und 0,00 mmol CO₂H/g (keine freien Carboxylgruppen mehr).

### Beispiel 3a

Dieses Beispiel zeigt die Addition eines symmetrischen Diisocyanats an die Hydroxygruppe des Produktes von Beispiel 2 unter Erzeugung eines Harzsystems.

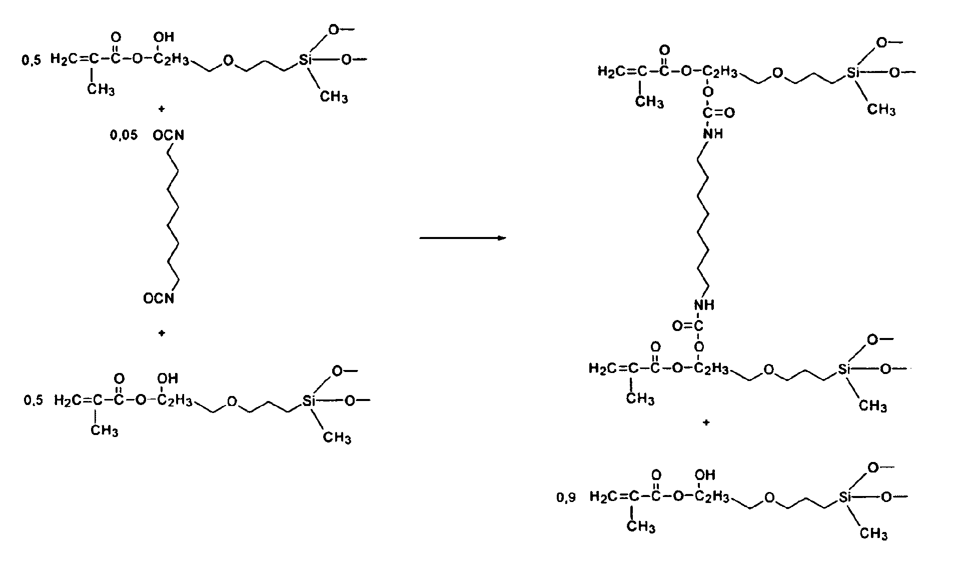

Zur Vorlage von 10,57 g (0,04 mol) obigen Harzes werden unter trockener Atmosphäre (Sauerstoff) bei RT unter Rühren 0,39 g (0,002 mol) 1,8-Diisocyanatooctan zugetropft und bei 30 °C gerührt. Die Umsetzung kann über die Abnahme der OCN-Bande mittels IR-Spektrum verfolgt werden. Die für die OCN-Gruppe charakteristische Bande erscheint im IR-Spektrum bei 2273 cm⁻¹. Es resultiert ein zähflüssiges Harz mit einer Viskosität von ca. 14 Pa·s bei 25°C (stark abhängig von den genauen Synthese- und Aufarbeitungsbedingungen insbesondere auch der Vorstufen).
IR-Daten: v_{(OH ← Edukt)} ≈ 3400 cm⁻¹ (Rest-OH, da nur mit 0,05 Molanteilen
Methacrylsäure-isocyanatoethylester umgesetzt wurde)
V_{(NH ← Urethan)} ≈ 3340 cm⁻¹ (Schulter am OH-Signal)
V_{(C=O ←} Methacrylat/Urethan) ≈ 1720 cm⁻¹
V_{(C=C ← Methacrylat)} ≈ 1638 cm⁻¹

### Beispiel 3b

Beispiel 3a wurde wiederholt, mit der Änderung, dass anstelle von 0,002 mol Diisocyanatooctan 0,004 mol Diisocyanatooctan eingesetzt wurden. Es resultiert ein zähflüssiges Harz mit einer Viskosität von ca. 48 Pa·s bei 25°C (stark abhängig von den genauen Synthese- und Aufarbeitungsbedingungen insbesondere auch der Vorstufen).
IR-Daten: V_{(OH ← Edukt)} ≈ 3400 cm⁻¹ (Rest-OH, da nur mit 0,10 Molanteilen
Methacrylsäure-isocyanatoethylester umgesetzt wurde)
V(_{NH ← Urethan)} ≈ 3340 cm⁻¹ (Schulter am OH-Signal)
V_{(C=O ← Methacrylat/Urethan)} ≈ 1720 cm⁻¹
V_{(C=C ← Methacrylat)} ≈ 1638 cm⁻¹

Ein Vergleich der Harzsysteme der Beispiele 3a und 3b zeigt beispielhaft, das sich die Viskosität (14 bzw. 48 Pa·s) über den Anteil des Vernetzungsreagenzes (in diesem Fall 1,8-Diisocyanatooctan) hinsichtlich Applikation einstellen lässt. Entsprechendes ist auch über die Kettenlänge des Vernetzungsreagenzes, dessen Struktur und die Anzahl der Vernetzungsgruppen möglich.

### Beispiele 3c-3e

Zur Vorlage von 10,6 g (0,04 mol) obigen Harzes werden unter trockener Atmosphäre (Sauerstoff) bei RT 0,016 mol 1,8-Diisocyanatooctan (→ Harzsystem 3c); als Additionskatalysator 1,25 % DBTL sowie 0,014 mol 1,8-Diisocyanatooctan (→ Harzsystem 3d); 0,010 mol 1,8-Diisocyanatooctan (→ Harzsystem 3e) zugesetzt. Die Umsetzung kann über die Abnahme der OCN-Bande mittels IR-Spektrum verfolgt werden. Die für die OCN-Gruppe charakteristische Bande erscheint im IR-Spektrum bei 2273 cm⁻¹ und verschwindet nach vollständigem Umsatz.

Zur Synthese von Harzsystem 3c erfolgt die eigentliche Umsetzung bei 50°C, welches in Form eines klebfreien Reaktionsproduktes isoliert wird (nach ca. 1-2 Tagen)

Zur Synthese von Harzsystem 3d erfolgt die eigentliche Umsetzung bei RT, welches in Form eines klebfreien Reaktionsproduktes isoliert wird (nach ca. 30 min)

Zur Synthese von Harzsystem 3e erfolgt die eigentliche Umsetzung bei 50°C, welches in Form eines noch klebrigen Reaktionsproduktes isoliert wird (nach ca. 1 Tagen).

Wie am Beispiel der Harzsysteme 3c-3e gezeigt, kann durch Variation des Vernetzungsreagenzes 1,8-Diisocyanatooctan im Bereich hoher Anteile, ebenfalls eine Konsistenz von noch klebrig bis klebfrei eingestellt werden. Die Vernetzungszeit hinsichtlich Applikation obiger Mischungen (z. B. als Schicht bzw. Formkörper) vor der sich anschließenden Endhärtung (durch radikalische Polymerisation, vgl. Beispiel 4) kann im Bereich von Minuten bis Tagen eingestellt werden.

### Beispiel 4

Dieses Beispiel beschreibt die Polymerisation der organisch polymerisierbaren Gruppen des Produktes aus Beispiel 3a.

Harzsystem 3a mit 1 % Lucirin TPO wird in eine Stäbchenform (2 x 2 x 25 mm³) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40°C das E-Modul sowie die Bruchfestigkeit der resultierenden Stäbchen bestimmt.

| | |
|---|---|
| E-Modul | ca. 1,88 GPa (Luft) / 1,34 GPa (Wasser) |
| Bruchfestigkeit | ca. 90 MPa (Luft) / 64 MPa (Wasser) |

Mit einem Vernetzer (1,8-Diisocyanatooctan) von nur 0,05 Molanteilen werden bei noch sehr geringer Harzviskosität deutlich gesteigerte Festigkeitswerte gegenüber der zugrundeliegenden Basismatrix (s. Beispiel 2 und Vergleichsbeispiel 1) erhalten. Da das Matrixsystem zudem monomerfrei mit bzgl. Verarbeitung günstiger Viskosität ist ein Einsatz für dentale Komposite besonders geeignet.

### Vergleichsbeispiel 1:

Harz aus Beispiel 1 b mit 1% Lucirin TPO wird in eine Stäbchenform (2 x 2 x 25 mm³) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | ca. 1,74 - 1,89 GPa (Luft) /1,12 - 1,13 GPa (Wasser) |
| Bruchfestigkeit | ca. 70 - 80 MPa (Luft) / 45 - 50 MPa (Wasser) |

## Patentansprüche

1. Verfahren zum Verknüpfen eines Silans mit der Formel (IIa) 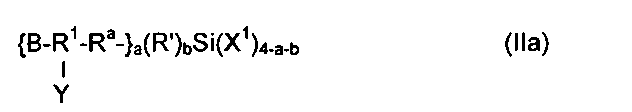 worin die Reste und Indices die folgende Bedeutung haben:
R^{a} ist eine offenkettige und/oder cyclische Alkylen-, Arylen- oder
Alkylenarylengruppe mit jeweils 1 bis 10 Kohlenstoffatomen, die durch eine oder
mehrere Sauerstoff- oder Schwefelatome oder Carboxyl- oder Aminogruppen unterbrochen sein oder solche Atome/Gruppen an ihrem dem Siliciumatom abgewandten Ende tragen kann;
R¹ ist eine mit Y substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder
Aminogruppen unterbrochen sein oder solche Atome/Gruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
B hat die Bedeutung einer geradkettigen oder verzweigten, organisch polymerisierbaren Gruppe mit mindestens einer C=C-Doppelbindung und mindestens 2 Kohlenstoffatomen,
X¹ ist eine Gruppe, die unter Ausbildung von Si-O-Si-Brücken eine hydrolytische Kondensationsreaktion eingehen kann,
Y bedeutet -OH oder -COOH,
a bedeutet 1 oder 2,
und b ist 0 oder 1,
zur Herstellung eines Produktes, das die Komponente (III) 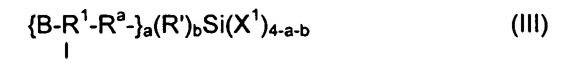
zweifach, dreifach oder in einer höheren Anzahl enthält, wobei die Reste B, R¹, R^{a}, R', X¹ und die Indices a und b wie oben für Formel (IIa) definiert sind und jeweils gleich oder verschieden sein können,
oder zur Vernetzung eines Kondensates, Teilkondensates, Polymeren oder Teilpolymeren, enthaltend Struktureinheiten mit der Formel (IIb) 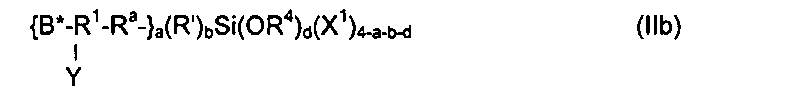 worin R¹, R^{a}, R', X¹ und Y gleich oder verschieden sein können und die vorstehend für Formel (IIa) genannte Bedeutung besitzen, B* gleich oder
verschieden sein kann und eine polymerisierbare Gruppe wie für B in Formel (IIa) definiert oder eine solche Gruppe ist, deren Doppelbindung bereits abreagiert hat, und R⁴ die Bedeutung einer Bindung zu einem anderen Siliciumatom, ggf.
stattdessen teilweise auch zu einem anderen Metallatom hat, das sich in Kieselsäureheteropolykondensate einbauen lässt, und ggf. zum Teil auch Wasserstoff sein kann, a und b die oben für Formel (IIa) genannte Bedeutung haben und d 1, 2 oder 3 ist,
über die Bindung R¹-,
**dadurch gekennzeichnet, dass** ein Silan mit der Formel (IIa) oder ein Isomer, ein Umesterungsprodukt oder ein durch Verlust eines Alkoholmoleküls entstandenes Kondensationsprodukt dieses Silans, oder ein Kondensat, ein Teilkondensat, ein Polymer oder ein Teilpolymer, enthaltend Struktureinheiten der Formel (IIb), umgesetzt wird mit einer Verbindung mit der Formel (IV)
Q-R⁵[-Q']_{c}, (IV)
worin Q und jedes Q' unabhängig voneinander -NCO, -OH oder -C(O)X', wobei -C(O)X' eine Carbonsäuregruppe oder eine aktivierte Carbonylverbindung bedeuten und
worin Q und/oder Q'-NCO oder -C(O)X' sein kann, wenn die Silane der Formel (IIa) oder der Kondensate/Polymerisate der Formel (IIb) wie oben definiert Gruppen Y mit der Bedeutung -OH enthalten, und
worin Q und/oder Q'-NCO oder-OH- sein kann, wenn die Silane der Formel (IIa) oder der Kondensate/Polymerisate der Formel (IIb) wie oben definiert Gruppen Y mit der Bedeutung -COOH enthalten,
wobei R⁵ in Ausnahmefällen (nämlich nur dann, wenn Q und Q' jeweils aktivierte Carbonsäuregruppen sind und c gleich 1 ist) eine Einfachbindung sein kann und
im Übrigen ein beliebiger Rest mit c+1 Valenzen ist, und wobei c 1, 2, 3, 4, 5 oder 6 oder eine darüberliegende ganze Zahl bedeutet.

2. Verfahren nach Anspruch 1, worin Q und/oder Q' in der Formel (IV) eine aktivierte Carbonylverbindung, ausgewählt unter Säurechloriden und Säureanhydriden, ist.

3. Verfahren nach Anspruch 1, worin Q und/oder Q' in der Formel (IV) eine Isocyanatgruppe ist.

4. Silan der nachstehenden Formel (V) 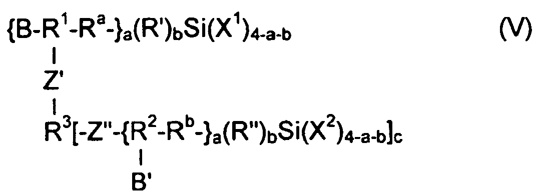 worin die Reste B, R¹, R^{a}, R', und X¹ wie in Formel (IIa) gemäß Anspruch 1 definiert sind und worin
die Reste R², dieselbe Bedeutung haben wie die Reste R¹ in Formel (IIa) gemäß Anspruch 1 und gleich oder verschieden untereinander und/oder von diesen sein können,
die Reste R^{b} dieselbe Bedeutung haben wie die Reste R^{a} in Formel (IIa) gemäß Anspruch 1 und gleich oder verschieden untereinander und/oder von diesen sein können,
die Reste R" dieselbe Bedeutung haben wie die Reste R' in Formel (IIa) gemäß Anspruch 1 und gleich oder verschieden untereinander und/oder von diesen sein können,
die Reste X² dieselbe Bedeutung haben wie die Reste X¹ in Formel (IIa) gemäß Anspruch 1 und gleich oder verschieden untereinander und/oder von diesen sein können,
die Reste B' dieselbe Bedeutung haben wie die Reste B in Formel (IIa) gemäß Anspruch 1 und gleich oder verschieden untereinander und/oder von diesen sein können,
Z' und Z" unabhängig voneinander die Bedeutung -NH-C(O)O-, -NH-C(O)- oder -CO(O)- haben, wobei die beiden erstgenannte Reste über die NH-Gruppe am Rest R³ gebunden sind, während die Carboxylatgruppe in beide Richtungen weisen kann,
R³ eine Einfachbindung (nur im Falle von c gleich 1 und Z' gleich Z" gleich -C(O)O) bedeutet oder ein beliebiger Rest ist, der c+1 Valenzen besitzt,
a 1 oder 2 bedeutet,
b 0 oder 1 ist, und
c 1, 2, 3, 4, 5 oder 6 oder eine darüberliegende ganze Zahl ist.

5. Silan gemäß Anspruch 4, worin R³ einen Kohlenwasserstoffrest, insbesondere eine offenkettige und/oder cyclische Alkylen-, Arylen- oder Alkylenarylengruppe mit jeweils 1 bis 30, stärker bevorzugt mit 1 bis 15 Kohlenstoffatomen darstellt, die optional durch eine oder mehrere Sauerstoff- oder Schwefelatome oder Carbonyl, Carboxyl-, Amino- oder Amidgruppen unterbrochen sein kann und die bei c größer 1 eine entsprechende Anzahl von Bindungen zu den Resten 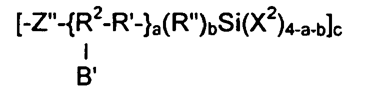 aufweist.

6. Silan nach Anspruch 4 oder 5, worin R' und/oder R" eine Gruppe mit 1 bis 10, vorzugsweise 1 bis 4 Kohlenstoffatomen darstellt und/oder
B und optional auch B' mindestens ein Michaelsystem, besonders bevorzugt eine Acrylat- oder Methacrylatgruppe tragen und/oder
X¹ und oder X² eine C₁-C₁₀-Alkoxygruppe ist.

7. Silan nach Anspruch 5 oder 6, worin
die Reste B und optional auch B' Acrylsäureestergruppen und/oder Methacrylsäureestergruppen des Trimethylolpropan, der Glycerins, des Pentaerythrits, der C₂-C₄-Alkandiole, der Polyethylenglycole, der Polypropylenglycole oder des gegebenenfalls substituierten und/oder alkoxylierten Bisphenol A sind oder diese Ester umfassen.

8. Silan nach einem der Ansprüche 5 bis 7, worin
die Reste B und optional auch B' ein durchgehendes Kohlenstoffskelett aufweisen oder dieses Skelett durch Heteroatome bzw. Gruppen, ausgewählt unter O, S, SO, NH, NHCO, PR, POR, CONHCO, COO, NHCOO, unterbrochen sind.

9. Silan nach einem der Ansprüche 4 bis 8, worin a gleich 1 und b gleich 0 ist.

10. Silan nach einem der Ansprüche 4 bis 8, worin a gleich 1 und b gleich 1 ist.

11. Silan nach einem der Ansprüche 4 bis 10, worin B und/oder B' eine (Meth-)Acrylatgruppe ist oder einen Rest umfasst, der über eine (Meth-)Acrylatgruppe an R¹ bzw. an R² gebunden ist und keine weitere oder eine, zwei oder drei (Meth-)Acrylatestergruppen aufweist.

12. Kondensat oder Teilkondensat, umfassend die folgende Struktureinheit (VI) 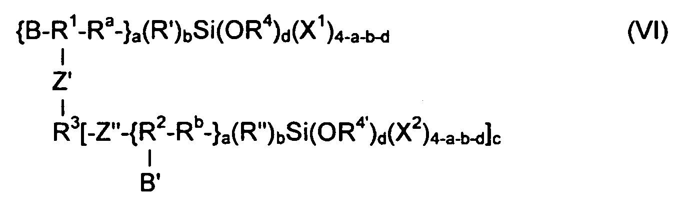 worin die Reste und Indices B, B', R¹, R², R³, R^{a}, R^{b} R', R", X¹, X², Z', Z" a, b und c wie in Formel (V) gemäß Anspruch 4 definiert sind, und worin R⁴, R⁴' und d wie in Formel (IIb) in Anspruch 1 definiert sind.

13. Kondensat oder Teilkondensat nach Anspruch 12, worin das Kondensat zu mindestens 30 Mol-%, bevorzugt mindestens 50 Mol-%, stärker bevorzugt mindestens 70 Mol-%, noch stärker bevorzugt mindestens 90 Mol% und ganz besonders bevorzugt 100 Mol-% aus der Struktureinheit (VI) besteht.

14. Kondensat oder Teilkondensat nach Anspuch 12 oder 13, weiterhin umfassend einen teilchenförmigen Füllstoff.

15. Polymerisat oder Teilpolymerisat, umfassend die folgende Struktureinheit (VII) 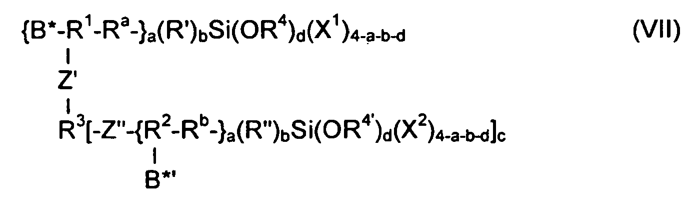 worin die Reste und Indices R¹ R², R³, R⁴, R⁴',R^{a}, R^{b} R', R", X¹ X², Z', Z", a, b, c und d wie in Formel (V) wie in Anspruch 12 definiert sind, und worin B* und B*' gleich oder verschieden sind und die für B* der Formel (IIb) in Anspruch 1 angegebene Bedeutung haben.

16. Polymerisat oder Teilpolymerisat nach Anspruch 15, worin das Polymerisat zu mindestens 30 Mol-%, bevorzugt mindestens 50 Mol-%, stärker bevorzugt mindestens 70 Mol-%, noch stärker bevorzugt mindestens 90 Mol-% und ganz besonders bevorzugt 100 Mol% aus der Struktureinheit (VII) besteht.

17. Polymerisat oder Teilpolymerisat nach Anspuch 15 oder 16, weiterhin umfassend einen teilchenförmigen Füllstoff.

## Claims

1. Process for linking a silane with the structure (IIa) 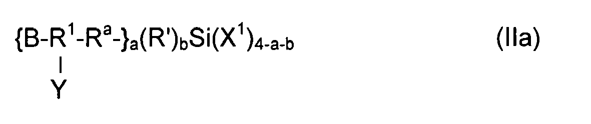 where the radicals and indices have the following meanings:
R^{a} is an open-chain and/or cyclic alkylene, arylene, or alkylene-arylene group having 1 to 10 carbon atoms in each case, which can be interrupted by one or
more oxygen or sulfur atoms or carboxyl or amino groups or can carry such atoms/groups at its end opposite the silicon atom,
R¹ is an open-chain and/or cyclic alkylene, arylene, or alkylene-arylene group having 1 to 10 carbon atoms in each case, substituted with Y, which can be interrupted by one or more oxygen or sulfur atoms or carboxyl or amino groups or
can carry such atoms/groups at one of its ends,
R' is an open-chain and/or cyclic alkyl, alkenyl, aryl, alkylaryl, or arylalkyl group, with preferably 1 to 20 carbon atoms,
B has the meaning of a straight-chain or branched organically polymerizable group with at least one C=C double bond and at least 2 carbon atoms,
X¹ is a group which can enter into a hydrolytic condensation reaction under formation of Si-O-Si bridges,
Y means -OH or -COOH,
a means 1 or 2, and
b is 0 or 1,
for the preparation of a product which contains component (III) 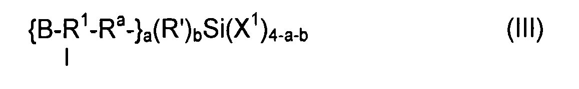
twice, in triplicate or in a higher quantity, where the radicals B, R¹, R^{a}, R', X¹ and the indices a and b are defined as above for structure (IIa) and can be identical or different in each case,
or for the cross-linking of a condensate, a partial condensate, a polymer or a partial polymer comprising structural units having structure (IIb) 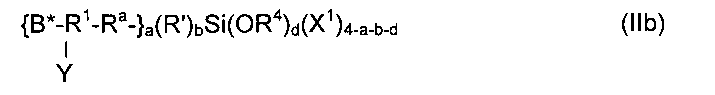 where R¹, R^{a}, R', X¹, and Y can be identical or different and have the meaning specified above for structure (IIa), B* can be identical or different and is a polymerizable group as defined for B in structure (IIa) or such a group, the double bond of which has already reacted, and R⁴ has the meaning of a bond to another silicon atom, optionally instead of this partially also to another metal atom which can be inserted into silicic acid heteropolycondensates, and in given cases can partly instead be hydrogen, a and b have the meaning specified above for structure (IIa), and d is 1, 2 or 3.
via the bond R¹-,
**characterized in that** a silane having structure (IIa), or an isomer, a re-esterification product or a condensation product of said silane, which condensation product was formed by the loss of an alcohol molecule, or a condensate, a partial condensate, a polymer, or a partial polymer comprising structural units of structure (IIb) is reacted with a compound having the structure (IV)
Q-R⁵[-Q']_{c}, (IV)
where Q and each Q' independently of each other mean -NCO, -OH, or -C(O)X',
where -C(O)X' means a carboxylic acid group or an activated carbonyl compound and
where Q and/or Q' can be -NCO or -C(O)X', when the silanes of structure (IIa) or of the condensates/polymerisates of structure (IIb) as defined above comprise groups Y having the meaning -OH, and
where Q and/or Q' can be -NCO or -OH-, when the silanes of structure (IIa) or of the condensates/polymerisates of structure (IIb) as defined above comprise groups Y having the meaning -COOH,
where R⁵ in exceptional cases (namely only in case Q and Q' each are activated carboxylic acid groups and c is equal to 1) can be a single bond and for the rest is an optional radical with c+1 valences,
and where c means 1, 2, 3, 4, 5, or 6, or an integer superior thereto.

2. Process according to claim 1, where Q and/or Q' in structure (IV) is an activated carbonyl compound selected from among acid chlorides and acid anhydrides.

3. Process according to claim 1, where Q and/or Q' in structure (IV) is an isocyanate group.

4. Silane of the following structure (V) 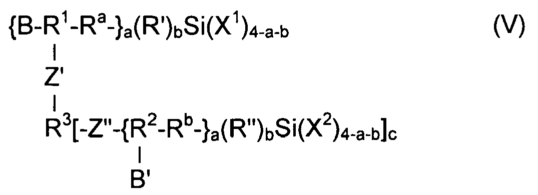 where the radicals B, R¹, R^{a}, R', and X¹ are defined as in structure (IIa) according to claim 1 and where
the radicals R² have the same meaning as the radicals R¹ in structure (IIa) according to claim 1 and can be identical or different among themselves and/or therefrom,
the radicals R^{b} have the same meaning as the radicals R^{a} in structure (IIa) according to claim 1 and can be identical or different among themselves and/or therefrom,
the radicals R" have the same meaning as the radicals R' in structure (IIa) according to claim 1 and can be identical or different among themselves and/or therefrom,
the radicals X² have the same meaning as the radicals X¹ in structure (IIa) according to claim 1 and can be identical or different among themselves and/or therefrom,
the radicals B' have the same meaning as the radicals B in structure (IIa) according to claim 1 and can be identical or different among themselves and/or therefrom,
Z' and Z" independently of each other have the meaning -NH-C(O)O-, -NH-C(O)-, or -CO(O)-, where the two first mentioned radicals are bonded to the radical R³ via the NH-group, whereas the carboxylate group can point in both directions,
R³ means a single bond (only if c is equal to 1 and Z' which is equal to Z" is equal to -C(O)O) or is an arbitrarily selected radical which has c+1 valences,
a means 1 or 2,
b is 0 or 1, and
c is 1, 2, 3, 4, 5 or 6 or an integer superior thereto.

5. Silane according to claim 4, where R³ represents a hydrocarbon radical, particularly an open-chain and/or cyclic alkylene, arylene, or alkylene-arylene group having 1 to 30 carbon atoms in each case, more preferably having 1 to 15 carbon atoms, which can optionally be interrupted by one or more oxygen or sulfur atoms or carbonyl, carboxyl, amino or amide groups, and which in the case that c is larger than 1, has a corresponding number of bonds to the radicals

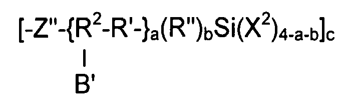

6. Silane according to claim 4 or 5, in which
R' and/or R" represents a group having 1 to 10, preferably 1 to 4, carbon atoms and/or
B and optionally also B' carry at least one Michael system, particularly preferably an acrylate or methacrylate group, and/or
X¹ and/or X² is a C₁-C₁₀-alkoxy group.

7. Silane according to claim 5 or 6, in which
the radicals B and optionally also B' are acrylic acid ester groups and/or methacrylic acid ester groups of trimethylolpropane, of glycerin, of pentaerythritol, of C₂-C₄-alkane diols, of polyethylene glycols, of polypropylene glycols, or of optionally substituted and/or alkoxylated bisphenol A, or comprise said esters.

8. Silane according to one of the claims 5 to 7, in which
the radicals B and optionally also B' comprise an end-to-end carbon skeleton or said skeleton is interrupted by heteroatoms or groups chosen from among O, S, SO, NH, NHCO, PR, POR, CONHCO, COO, NHCOO.

9. Silane according to one of the claims 4 to 8, in which a is equal to 1 and b is equal to 0.

10. Silane according to one of the claims 4 to 8, in which a is equal to 1 and b is equal to 1.

11. Silane according to one of the claims 4 to 10, in which B and/or B' is a (meth)acrylate group or comprises a radical which is bonded via a (meth)acrylate group to R¹ or R² and comprises no additional or one, two, or three (meth)acrylate ester groups.

12. Condensate or partial condensate, comprising the following structural unit (VI) 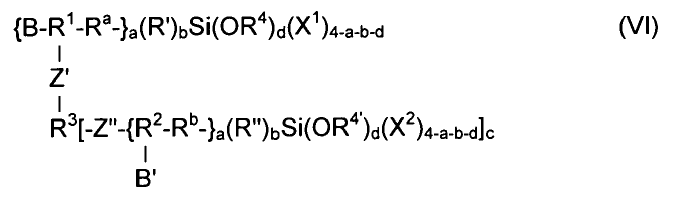 where the radicals and indices B, B', R¹, R², R³, R^{a}, R^{b} R', R", X¹, X², Z', Z" a, b and c are defined as in structure (V) according to claim 4, and where R⁴, R⁴', and d are defined as in structure (IIb) in claim 1.

13. Condensate or partial condensate according to claim 12, where the condensate comprises at least 30 mol-%, preferably at least 50 mol-%, more preferably at least 70 mol-%, even more preferably at least 90 mol-% and particularly preferably 100 mol-% of the structural unit (VI).

14. Condensate or partial condensate according to claim 12 or 13, further comprising a particle-shaped filler.

15. Polymerisate or partial polymerisate, comprising the following structural unit (VII) 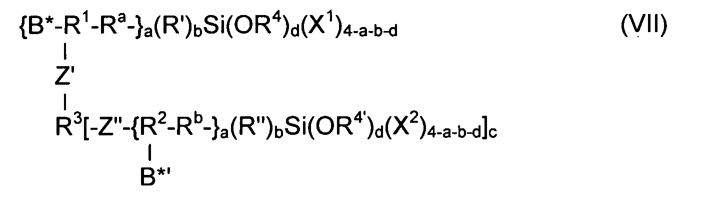 where the radicals and indices R¹, R², R³, R⁴, R⁴', R^{a}, R^{b} R', R", X¹, X², Z', Z", a, b, c, and d are defined as in structure (V) according to claim 12, and where B* and B*' are identical or different and have the meaning specified for B* of structure (IIb) in claim 1.

16. Polymerisate or partial polymerisate according to claim 15, wherein the polymerisate comprises at least 30 mol-%, preferably at least 50 mol-%, more preferably at least 70 mol-%, even more preferably at least 90 mol-% and particularly preferably 100 mol-% of the structural unit (VII).

17. Polymerisate or partial polymerisate according to claim 15 or 16, further comprising a particle-shaped filler.

## Revendications

1. Procédé pour enchaîner un silane de la formule (IIa) 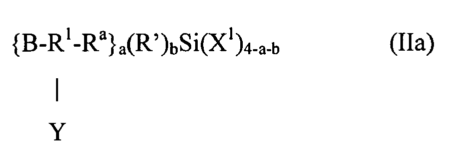 dans laquelle les radicaux et les indices ont les significations suivantes :
R^{a} est un groupe alkylène, arylène ou alkylarylène à chaîne ouverte et/ou cyclique, avec respectivement 1 à 10 atomes de carbone, qui peut être interrompu par un ou plusieurs atomes d'oxygène ou de soufre ou des groupes carboxyles ou aminos ou qui peut porter un tel atome ou un tel groupe à son extrémité opposée au silicium ;
R¹ est un groupe alkylène, arylène ou alkylarylène à chaîne ouverte et/ou cyclique, avec respectivement 1 à 10 atomes de carbone, substitué par Y, qui peut être interrompu par un ou plusieurs atomes d'oxygène ou de soufre ou des groupes carboxyles ou aminos ou qui peut porter un tel atome ou un tel groupe à son extrémité opposée au silicium ;
R' est un groupe alkyle, alcényle, aryle, alkylaryle ou arylalkyle à chaîne ouverte et/ou cyclique avec de préférence 1 à 20 atomes de carbone,
B a la signification d'un groupe linéaire ou ramifié, organiquement polymérisable, avec au moins une double liaison C=C et au moins 2 atomes de carbone,
X¹ est un groupe qui, moyennant la formation de ponts Si-O-Si, peut participer à une réaction hydrolytique de condensation,
Y signifie -OH ou -COOH,
a signifie 1 ou 2
et b est égal à 0 ou à 1,
en vue de la préparation d'un produit qui contient le composant (III) 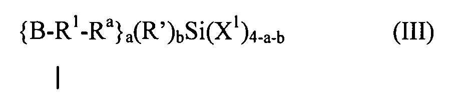 en deux, trois, ou en un plus grand nombre d'exemplaires, les radicaux B, R¹, R^{a}, R' et X¹ étant définis comme ci-dessus pour la formule (IIa) et pouvant être respectivement identiques ou différents,
ou en vue de la réticulation d'un condensat, d'un condensat partiel, d'un polymère ou
d'un polymère partiel, contenant des unités structurelles de la formule (IIb) 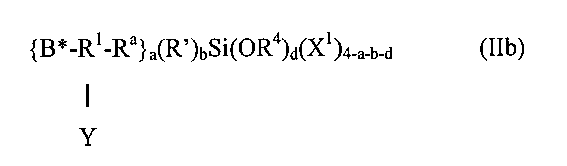
dans laquelle R¹, R^{a}, R' et Y peuvent être identiques ou différents et possèdent la signification énoncée pour la formule (IIa), B* peut être identique ou différent et définit un groupe polymérisable comme pour B dans la formule (IIa) ou est un tel groupe dont la double liaison a déjà réagi, et R⁴ a la signification d'une liaison avec un autre atome de silicium, à la place de cela aussi, le cas échéant, en partie, avec un autre atome de métal qui est susceptible de s'intégrer dans des hétéropolycondensats d'acide silicique, et qui peut aussi, en partie, le cas échéant, être un hydrogène, a et b ont la signification énoncée ci-dessus pour la formule (IIa) et d est égal à 1, 2 ou 3,
par la liaison R¹-,
**caractérisé en ce qu'**un silane avec la formule (IIa) ou un isomère, un produit de transestérification ou un produit de condensation de ce silane obtenu par la perte d'une molécule d'alcool, ou un condensat, un condensat partiel, un polymère ou un polymère partiel, contenant des unités structurelles de la formule (IIb), est mis en réaction avec un composé de la formule (IV)
Q-R⁵[-Q']_{c} (IV)
dans laquelle Q et chacun des Q', indépendamment les uns des autres, signifient -NCO, -OH ou -C(O)X', sachant que -C(O)X' signifie un groupe acide carboxylique ou un composé carbonyle activé et
dans laquelle Q et/ou Q' peuvent être -NCO ou -C(O)X' quand les silanes de la formule (IIa) ou les condensats/polymères de la formule (IIb) comme défini ci-dessus contiennent des groupes Y ayant la signification -OH et
dans laquelle Q et/ou Q' peuvent être NCO ou -OH quand les silanes de la formule (IIa) ou les condensats/polymères de la formule (IIb) comme défini ci-dessus contiennent des groupes Y ayant la signification -COOH,
dans laquelle, dans des cas exceptionnels (en l'occurrence seulement quand Q et Q' sont chacun des groupes acides carboxyliques activés et que c est égal à 1), R⁵ peut être une liaison simple et est dans les autres cas un radical quelconque avec c+1 valences,
et dans laquelle c signifie 1, 2, 3, 4, 5 ou 6 ou un nombre entier supérieur.

2. Procédé selon la revendication 1, dans lequel Q et/ou Q' dans la formule (IV) sont des composés carbonyles, choisis parmi des chlorures d'acide et des anhydrides d'acides.

3. Procédé selon la revendication 1, dans lequel Q et/ou Q' dans la formule (IV) sont des groupes isocyanates.

4. Silane de la formule (V) ci-après, 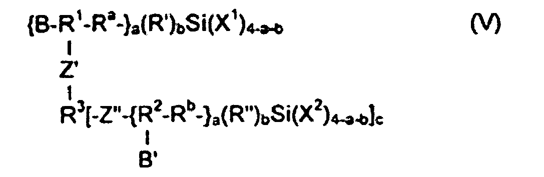 dans laquelle les radicaux B, R¹, R^{a}, R' et X¹ sont définis comme dans la formule (IIa) selon la revendication 1 et dans laquelle
les radicaux R² ont la même signification que les radicaux R¹ dans la formule (IIa) selon la revendication 1 et peuvent être identiques ou différents entre eux et/ou de ces derniers,
les radicaux R^{b} ont la même signification que les radicaux R^{a} dans la formule (IIa) selon la revendication 1 et peuvent être identiques ou différents entre eux et/ou de ces derniers,
les radicaux R" ont la même signification que les radicaux R' dans la formule (IIa) selon la revendication 1 et peuvent être identiques ou différents entre eux et/ou de ces derniers,
les radicaux X² ont la même signification que les radicaux X¹ dans la formule (IIa) selon la revendication 1 et peuvent être identiques ou différents entre eux et/ou de ces derniers,
les radicaux B' ont la même signification que les radicaux B dans la formule (IIa) selon la revendication 1 et peuvent être identiques ou différents entre eux et/ou de ces derniers,
Z' et Z", indépendamment l'un de l'autre, ont la signification NH-C(O)O-, -NH-C(O)- ou -CO(O)-, sachant que les deux radicaux cités en premier sont liés au radical R³ par l'intermédiaire des groupes NH, tandis que les groupes carboxylates peuvent être orientés dans les deux sens,
R³ est une liaison simple (seulement dans le cas où c est égal à 1 et Z' est identique à Z" et signifie -C(O)O-, ou est un radical quelconque qui possède c+1 valences,
a signifie 1 ou 2
b est égal à 0 ou 1 et
c est égal à 1, 2, 3, 4, 5 ou 6 ou un nombre entier supérieur.

5. Silane selon la revendication 4, dans lequel R³ représente un radical hydrocarbure, en particulier un groupe alkylène, arylène ou alkylènarylène à chaîne ouverte et/ou cyclique avec respectivement 1 à 30, plus préférablement avec 1 à 15 atomes de carbone, qui peut être interrompu en option par un ou plusieurs atomes d'oxygène ou de soufre, ou par un ou plusieurs groupes carbonyles, carboxyles, aminos ou amides et qui présente pour c supérieur à 1 un nombre correspondant de liaisons aux radicaux

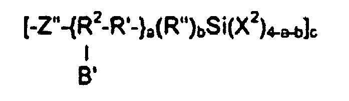

6. Silane selon la revendication 4 ou 5, dans lequel R' et/ou R" représentent un groupe avec 1 à 10, de préférence 1 à 4 atomes de carbone et/ou
B, et en option aussi B', portent au moins un système de Michael, de façon particulièrement préférée un groupe acrylate ou méthacrylate et/ou
X¹ et/ou X² sont des groupes alcoxyles en C₁ à C₁₀.

7. Silane selon la revendication 5 ou 6, dans lequel
les radicaux B, et en option aussi B', sont des groupes esters d'acide acrylique et/ou des groupes esters d'acide méthacryliques du triméthylol propane, du glycérol, du pentaérythritol, des alcane diols en C₂ à C₄, des polyéthylèneglycols, des polypropylèneglycols, ou du bisphénol A, substitué et/ou alcoxylé le cas échéant, ou comprennent ces esters.

8. Silane selon l'une quelconque des revendications 5 à 7, dans lequel
les radicaux B, et en option aussi B', comportent un squelette carboné ininterrompu ou dans lequel ce squelette est interrompu par des hétéroatomes, respectivement par des groupes, choisis parmi O, S, SO, NH, NHCO, PR, POR, CONHCO, COO, NHCOO.

9. Silane selon l'une quelconque des revendications 4 à 8, dans lequel a est égal à 1 et b est égal à 0.

10. Silane selon l'une quelconque des revendications 4 à 8, dans lequel a est égal à 1 et b est égal à 1.

11. Silane selon l'une quelconque des revendications 4 à 10, dans lequel B et/ou B' sont des groupes (méth)acrylates ou comprennent un radical qui est lié à R¹, respectivement à R², par l'intermédiaire d'un groupe (méth)acrylate et qui ne comporte pas d'autre groupe ester (méth)acrylate ou en comporte un, deux ou trois.

12. Condensat ou condensat partiel, comprenant l'unité structurelle suivante (VI) 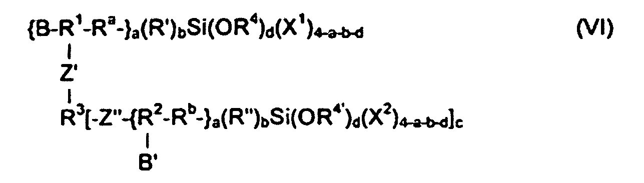 dans laquelle les radicaux et les indices B, B', R¹, R², R³, R^{a}, R^{b}, R', R", X¹, Y², Z', Z", a, b et c sont définis comme dans la formule (V) conformément à la revendication 4, et dans laquelle R⁴, R^{4,} et d sont définis comme dans la formule (IIb) dans la revendication 1.

13. Condensat ou condensat partiel selon la revendication 12, dans lequel le condensat consiste à au moins 30 % en mole, de préférence au moins 50 % en mole, plus préférablement au moins 70 % en mole, encore plus préférablement au moins 90 % en mole et de façon particulièrement préférée 100 % en mole en l'unité structurelle (VI).

14. Condensat ou condensat partiel selon la revendication 12 ou 13, comprenant en outre une charge sous forme de particules.

15. Polymère ou polymère partiel, comprenant l'unité structurelle suivante (VII) 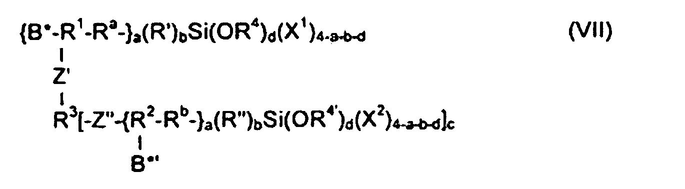 dans laquelle les radicaux et les indices R¹, R², R³, R⁴, R⁴', R^{a}, R^{b}, R', R", X¹, X², Z', Z", a, b, c et d sont définis comme dans la formule (V) comme dans la revendication 12, et dans laquelle B* et B* sont identiques ou différents et ont la signification spécifiée pour B* de la formule (IIb) dans la revendication 1.

16. Polymère ou polymère partiel selon la revendication 15, dans lequel le polymère consiste à au moins 30 % en mole, de préférence au moins 50 % en mole, plus préférablement au moins 70 % en mole, encore plus préférablement au moins 90 % en mole et de façon particulièrement préférée 100 % en mole en l'unité structurelle (VII).

17. Polymère ou polymère partiel selon la revendication 15 ou 16, comprenant en outre une charge sous forme de particules.
